Europäisches Patentamt

European Patent Office

Office européen des brevets

(19)

(11) Veröffentlichungsnummer: **0 327 542**
**B1**

(12) **EUROPÄISCHE PATENTSCHRIFT**

(45) Veröffentlichungstag der Patentschrift: 09.01.91

(51) Int. Cl.⁵: **B 60 S 3/04**

(21) Anmeldenummer: 87906558.9

(22) Anmeldetag: 06.10.87

(86) Internationale Anmeldenummer:
PCT/DE87/00453

(87) Internationale Veröffentlichungsnummer:
WO 88/02706 21.04.88 Gazette 88/09

(54) FAHRZEUGWASCHANLAGE.

(30) Priorität: 16.10.86 DE 3635213

(43) Veröffentlichungstag der Anmeldung:
16.08.89 Patentblatt 89/33

(45) Bekanntmachung des Hinweises auf die
Patenterteilung:
09.01.91 Patentblatt 91/02

(84) Benannte Vertragsstaaten:
AT BE CH DE FR GB IT LI NL SE

(56) Entgegenhaltungen:
DE-A-1 546 135      US-A-3 400 727
US-A-2 732 846      US-A-3 409 030
US-A-3 288 109      US-A-4 020 857
US-A-3 368 571      US-A-4 135 533

Soviet Institutions Illustrated, Section PQ,
Woche 8441, 21.11.1984, Derwent Publications
Ltd (London, GB), Klasse Q, Seite 17, Nr.
84-255245/41 & SU-A 524799

(73) Patentinhaber: **Alfred Kärcher GmbH & Co.**
**Alfred-Kärcher-Strasse 28-40**
**D-7057 Winnenden (DE)**

(72) Erfinder: **VETTER, Kurt**
**Taubenweg 20**
**D-7063 Welzheim (DE)**
Erfinder: **SCHULZE, Werner**
**Alpenrosenstra e 5**
**D-7057 Winnenden (DE)**
Erfinder: **KRAUTTER, Jürgen**
**Lämmlestrasse 18**
**D-7056 Weinstadt 3 (DE)**
Erfinder: **HÄFNER, Kurt**
**Kaiserbacher Stra e 34**
**D-7157 Murrhardt 3 (DE)**

(74) Vertreter: **Hoeger, Stellrecht & Partner**
**Uhlandstrasse 14 c**
**D-7000 Stuttgart 1 (DE)**

**Beschreibung**

Die Erfindung betrifft eine Fahrzeugwaschanlage, insbesondere für Fahrzeuge mit stark zerklüfteter Oberfläche, mit mehreren in Fahrzeuglängsrichtung am Fahrzeug vorbeigeführten, quer zur Fahrzeuglängsrichtung längs eines Portals nebeneinander angeordneten Spritzdüsen für eine gegebenenfalls mit Chemikalien versetzte Reinigungsflüssigkeit, wobei die Spritzdüsen als einen Punkstrahl abgebende Rotordüsen ausgebildet sind, deren Punkstrahl unter einem spitzen Winkel bis etwa maximal 30° zur Drehachse der Rotordüsen geneigt austritt und einen Kegelmantel beschreibt.

Nutzfahrzeuge, insbesondere Baufahrzeuge und Fahrzeuge mit unregelmäßigen Aufbauten, können aufgrund der Fahrzeug-Geometrie mit den üblichen Bürstenwaschanlagen nicht gewaschen werden. Es ist daher eine Reinigung mit einer handgeführten Hochdruck-Spritzeinrichtung notwendig.

Es sind Fahrzeugwaschanlagen bekannt, bei welchen aus Spritzdüsen, die an Wasserzuführungsrohren angebracht sind, flächige Wasserstrahlen zur Fahrzeugreinigung erzeugt werden. Die Reinigungsflüssigkeit kann zum Beispiel ein Wasserdampfgemisch sein (DE—B—34 36 061). Als Reinigungsflüssigkeit kann auch beheiztes oder unbeheiztes, unter hohem Druck stehendes Wasser mit oder ohne Chemikalienzusatz verwendet werden. Damit bei diesen bekannten Reinigungsanlagen eine Flächenwirkung erzielt wird, sind die Düsen als Flachstrahldüsen mit einem Spritzwinkel zwischen 15 und 60° ausgebildet. Während diese Lösungen bei der Reinigung ebenflächiger Fahrzeugkonturen befriedigende Ergebnisse zeigen, versagen sie bei zerklüfteten Farhzeugkonturen wegen der Abbremsung und Zerstäubung der Flachstrahlen in Luft. Die Reichweite dieser Flachstrahlen, bei welcher noch eine wirksame Reinigung erzielt werden kann, ist etwa auf 0,5 m begrenzt. In einer Entfernung von 1 m von der Düse kann lediglich noch eine Benetzung der verschmutzten Oberfläche erreicht werden, nicht aber eine zur Reinigung notwendige mechanische Wirkung, die sich vom Aufpralldruck ableitet.

Aus der DE—B—1 806 634 ist eine Kraftfahrzeugwaschanlage bekannt, bei der längs eines Portals mehrere Düsen angeordnet sind, von denen jede am Ende eines flexiblen Schlauchstückes eine Auslaßdüse trägt, die gegebenenfalls durch die Rückstoßwirkung längs eines Kegelmantels umlaufen und damit einen rotierenden Reinigungsstrahl erzeugen kann. Bei einer solchen Anlage ist es notwendig, Düsen dieser Bauart sehr dicht aneinander zu setzen, um eine gründliche Reinigung der gesamten Oberfläche des Kraftfahrzeuges zu erreichen. Da die genannten Düsen durch die bewegten Schlauchteile schnell verschleißen, ist eine solche Anlage außerordentlich wartungsintensiv. Es können sich auch Schwierigkeiten bei der Reinigung einer zerklüfteten Oberfläche ergeben, da unter Umständen bei nicht ausreichender Anzahl von Düsen der Strahl in einer bestimmten Fahrzeughöhe immer nur unter einem bestimmten Winkel auf die Oberfläche trifft, so daß bei Hinterschneidungen eine zuverlässige Reinigung nicht möglich ist.

Es ist Aufgabe der Erfindung, eine Fahrzeugwaschanlage vorzuschlagen, die auch zur Reinigung von Fahrzeugen mit stark zerklüfteter Oberfläche eingesetzt werden kann.

Diese Aufgabe wird bei einer Fahrzeugwaschanlage der eingangs beschriebenen Art (DE—B—1 806 634) erfindungsgemäß dadurch gelöst, daß die Spritzdüsen in einer quer zur Fahrzeuglängsachse liegenden Ebene längs des Portals um ein Fahrzeug herum hin- und herbewegbar sind, wobei die Bewegungsamplitude benachbarter Spritzdüsen mindestens so groß ist, daß sich die wiederholt von ihrem Punktstrahlen überstrichenen Teile des Fahrzeuges aneinander anschließen.

Punkstrahlen bleiben über einen größeren Weg scharf gebündelt, so daß auch in einem Abstand von der Spritzdüse in der Größenordnung von 1 m oder mehr noch genügend Aufprallenergie im Strahl enthalten ist, um eine einwandfreie Reinigungswirkung zu erzielen.

Der Punkstrahl läuft längs eines Kegelmantels um und erreicht somit sowohl in einer quer zur Fahrzeuglängsachse liegenden Richtung als auch in einer parallel zur Fahrzeuglängsachse liegenden Richtung einen größeren Oberflächenbereich des Fahrzeuges, so daß insgesamt eine flächige Reinigung möglich wird. Durch die Kombination mit der wiederholten Hin- und Herbewegung der Spritzdüsen selbst erhält man eine Mehrfachüberdeckung unter unterschiedlichem Auftreffwinkel, so daß auch "tote Winkel" vollständig von der Reinigungsflüssigkeit erreicht werden.

Wenn im folgenden von "wiederholt bewegbar" gesprochen wird, so bedeutet dies nicht, daß die Bewegung im mathemaschen Sinne streng periodisch sein muß, wesentlich ist nur, daß ein bestimmter Oberflächenbereich wiederholt von Punkstrahlen überstrichen wird. Der Ausdruck "Fahrzeugkontur" bedeutet im folgenden die Fahrzeugaußenkontur ohne Berücksichtigung der Rücksprünge und Zerklüftungen, im wesentlichen sollen damit zwei senkrechte Seitenflächen sowie die horizontale Oberseite und gegebenenfalls die horizontale Unterseite des Fahrzeuges bestimmt werden, dies entspricht im wesentlichen auch dem Verlauf der Teile des Portals.

Es ist dabei vorteilhaft, wenn die Richtung der Drehachse der Spritzdüse verstellbar ist. Dadurch kann eine Fahrzeugwaschanlage auf bestimmte Fahrzeuge eingestellt werden, beispielsweise können in den Radbereich des Fahrzeuges mehrere Punkstrahlen gerichtet werden, während in weniger verschmutzte Bereiche eine geringere Anzahl von Punkstrahlen gerichtet wird. Dadurch wird die Reinigungswirkung in dem stark verschmutzten Radbereich intensiviert.

Die Spritzdüsen können in an sich bekannter Weise durch die Reinigungsflüssigkeit hydrodynamisch angetrieben sein, beispielsweise können die Spritzdüsen als Turbinenläufer- oder als Rückstoßdüsen ausgebildet sein. Es ist auch möglich, die Spritzdüsen durch einen motorischen Antrieb anzutreiben, gegebenenfalls über Getriebemittel wie Ketten oder Zahnräder.

Es ist auch vorteilhaft, wenn der Neigungswinkel des Punktstrahls gegenüber der Drehachse verstellbar ist. Dadurch läßt sich der Öffnungswinkel des vom Punktstrahl durchlaufenen Kegels verändern und damit die Größe der vom Strahl überstrichenen Fläche sowie der Auftrettwinkel auf der zu reinigenden Oberfläche.

Besonders vorteilhaft ist es, wenn die Spritzdüsen durch einen gemeinsamen Antrieb wiederholt hin- und herbewegbar sind.

Dazu kann beispielsweise vorgesehen sein, daß mehrere Spritzdüsen an einer wiederholt hin- und herbewegten Zufuhrleitung für die Reinigungsflüssigkeit gehalten sind. Eine solche Zufuhrleitung kann beispielsweise einfach eine senkrechte Rohrleitung sein, die neben der Seitenfläche des Fahrzeugs angeordnet ist und parallel zu ihrer Längsrichtung auf- und abbewegt wird.

Bei einer weiteren bevorzugten Ausführungsform ist vorgesehen, daß die Zufuhrleitung längs der Stützen und des Querbalkens eines Portals verläuft und im Übergang zwischen Stützen und Querblaken flexible Umlenkbereiche aufweist. In diesen Umlenkbereichen kann die Leitung umgebogen werden, in Längsrichtung kann sie jedoch Zug- und Schubkräfte übertragen, so daß über diese Leitung auch über die flexiblen Bereiche hinweg die wiederholte Verschiebe-Bewegung auf die Spritzdüsen übertragen werden kann.

Es ist besonders vorteilhaft, wenn die Spritzdüsen um eine Achse verstellbar sind, die quer zur Fahrzeuglängsachse und längs der Fahrzeugkontur oder des Portals verläuft. Dadurch ist der Anstellwinkel verstellbar, mit dem die Punktstrahlen auf die Fahrzeugoberfläche auftreffen. Dabei ist es besonders günstig, wenn auf das Fahrzeug ansprechende Sensoren vorgesehen sind, die über eine Steuerung einen Antrieb betätigen, der die Spritzdüsen um die quer zur Fahrzeuglängsachse und längs der Fahrzeugkonturen oder des Portals verlaufende Achse verdreht. Auf diese Weise können die Punktstrahlen so gesteuert werden, daß sie zunächst dem Fahrzeug schräg entgegengerichtet sind, also die Vorderseite des Fahrzeuges treffen. Sobald das Fahrzeug die Spritzdüsen erreicht hat, werden die Punktstrahlen in einer quer zur Fahrzeugrichtung liegenden Ebene auf die Seitenflächen des Fahrzeugs gerichtet, nach dem Vorbeifahren des Fahrzeuges richten sich die Punktstrahlen in Fahrtrichtung, so daß dann die Rückseite des Fahrzeuges von den Punktstrahlen getroffen wird. Auf diese Weise kann durch seitlich des Fahrzeugs angeordnete Spritzdüsen das Fahrzeug rundum vollständig gereinigt werden.

Den Spritzdüsen können für einzelne Spritzdüsen oder Gruppen von Spritzdüsen betätigbare Schließventile zugeordnet sein, so daß der Flüssigkeitszufluß über die Fläche des Fahrzeuges teilweise unterbrochen werden kann, wodurch die Reinigungswirkung in anderen Bereichen erhöht werden kann.

Es ist günstig, wenn Spritzdüsen mit unterschiedlichen Öffnungen vorgesehen sind, beispielsweise können im unteren Teil der Anlage Spritzdüsen mit größeren Öffnungen angeordnet sein. Dadurch ist im stark verschmutzten unteren Bereich eine größere Reinigungswirkung zu erzielen als in dem weniger verschmutzten Bereich der Aufbauten.

Es ist auch möglich, daß die Spritzdüsen längs der Fahrzeugkontur mit unterschiedlichen gegenseitigen Abständen angeordnet sind.

Die Reinigungswirkung läßt sich erhöhen, wenn der Punktstrahl pulsierend ausgebildet ist. Vorzugsweise kann vorgesehen werden, daß die Pulsationsfrequenz des Punktstrahls bei Verwendung einer Rotordüse ein ganzzahliges Vielfaches der Drehzahl der Rotordüse ist. Dabei kann die Drehung der Rotordüse unmittelbar zur Erzeugung der Pulsation ausgenutzt werden, beispielsweise durch Unterbrechung der Flüssigkeitszufuhr zur Rotordüse innerhalb eines bestehenden Drehwinkelbereichs der Rotordüse.

Bei der Anordnung der Spritzdüsen an einem Portal kann dies gegenüber einer senkrechten, quer zur Fahrzeuglängsachse angeordneten Ebene geneigt sein, so daß die Reinigung über die Höhe des Fahrzeuges an unterschiedlichen Stellen erfolgt. Dadurch kann beispielsweise sichergestellt werden, daß von oben nach unten ablaufende, verschmutzte Flüssigkeit im unteren Bereich zuverlässig entfernt wird (Siehe z.B. die US—A—4,135,533, Spalte 4, Zeilen 50—55).

Die nachfolgende Beschreibung bevorzugter Ausführungsformen der Erfindung dient im Zusammenhang mit der Zeichnung der näheren Erläuterung. Es zeigen:

Figur 1: eine schematische Ansicht einer Portal-Fahrzeugwaschanlage in Vorderansicht;

Figur 2: eine Schnittansicht durch eine als Rotordüse ausgebildete Spritzdüse gemäß einem ersten bevorzugten Ausführungsbeispiel;

Figur 3: eine Schnittansicht längs Linie 3—3 in Figure 1 und

Figur 4: eine Schnittansicht entsprechend Figur 3 bei einem anderen bevorzugten Ausführungsbeispiel einer Fahrzeugwaschanlage.

Die in der Zeichnung dargestellte Fahrzeugwaschanlage weist ein Portal 1 mit zwei senkrechten Stützen 2 und 3 und einem diese an der Oberseite verbindenden Querbalken 4 auf. Das Portal läßt eine Durchfahrt für eine Fahrzeug 5 frei, das im dargestellten Ausführungsbeispiel als Lastkraftwagen wiedergegeben ist; hier könnte auch ein Traktor oder ein ähnliches Kraftfahrzeug mit einer Rücksprünge und Zerklüftungen aufweisenden Oberfläche gewaschen werden.

Das Portal kann stationär angeordnet sein, dann fährt das Fahrzeug unter dem Portal hindurch; es ist auch möglich, das Portal fahrbar auszugestalten, dann bleibt das Fahrzeug stehen.

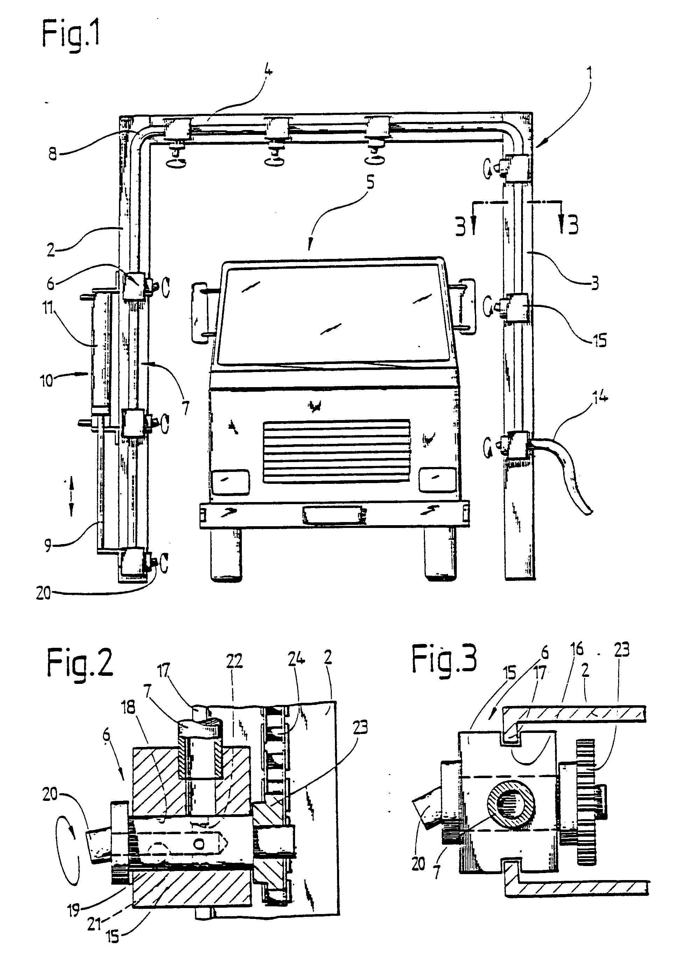

An dem Portal 1 sind längs der Stützen und längs des Querbalkens im Abstand zueinander mehrere Spritzköpfe 6 angeordnet, die in einer in Figur 1 nicht dargestellten Führung längs der Stützen beziehungsweise längs des Querbalkens verschieblich gelagert sind. Die Spritzköpfe 6 sind mittels einer Zufuhrleitung 7 für die von den Spritzköpfen zu versprühende Reinigungsflüssigkeit miteinander verbunden. Dabei kann die Zufuhrleitung 7 im Bereich zwischen den jeweils an einer Stütze oder am Querbalken gelagerten Spritzköpfen starr ausgebildet sein, während die Zufuhrleitung 7 im Übergangsbereich von den Stützen 2 und 3 in dem Querbalken 4 flexible Teile 8 aufweist. In diesem Bereich kann die Zufuhrleitung 7 aus einem Hochdruckschlauch bestehen, der zwar flexibel ist, der aber in einer in der Zeichnung nicht dargestellten Umlenkführung so geführt ist, daß er in Längsrichtung Schub- und Zugkräfte übertragen kann.

Mindestens einer der Spritzköpfe 6 ist mit dem Kolben 9 eines Kolbenzylinder-Aggregates 10 verbunden, dessen Zylinder 11 an der Stütze 2 gehalten ist. Beim Einziehen und Ausfahren des Kolbens 9 wird der mit diesem verbundene Spritzkopf längs der Stütze 2 über die Hublänge verschoben, wobei über die Zufuhrleitung 7 diese Bewegung auf alle anderen Spritzköpfe 6 übertragen wird, so daß bei wiederholtem Ein- und Ausfuhren des Kolbens die Spritzköpfe eine periodische Hin- und Herbewegung längs der Stützen und des Querbalkens ausführen.

Der Antrieb mittels des Kolbenzylinder-Aggregates 10 ist nur eine Möglichkeit, die Spritzköpfe periodisch, das heißt wiederholt, längs der Stützen beziehungsweise der Querbalken zu verschieben, eine solche Verschiebebewegung könnte auch mittels eines Kettentriebes oder mittels anderer, an sich bekannter Getriebemittel erfolgen. Wesentlich ist lediglich, daß die Spritzköpfe 6 wiederholt längs der Stützen und längs des Querbalkens verschoben werden.

Dabei sind verschiedene Bewegungen möglich, vorzugsweise werden die Spritzköpfe 6 so hin- und herbewegt, daß die Bereiche der zu reinigenden Fläche des Fahrzeuges 5, die von den Strahlen benachbarter Spritzköpfe beaufschlagt werden, mindestens aneinander anschließen, vorzugsweise sich überlappen. Es ist auch möglich, die Spritzköpfe 6 längs der gesamten Stütze zunächst in einer Richtung und dann wieder in der anderen Richtung zu bewegen, beispielsweise mittels einer paternosterähnlichen Führung. Dann überstreicht der von einem Spritzkopf abgegebene Strahl die gesamte Höhe der Stütze beziehungsweise die gesamte Breite des Querbalkens.

Die Spritzköpfe 6 selbst sind mit einer Spritzdüse 20 bestückt, durch die die Reinigungsflüssigkeit in Form eines Punktstrahles abgegeben wird. Um dies zu erreichen, wird den Spritzdüsen die Reinigungsflüssigkeit mittels eines an sich bekannten Hochdruckgerätes unter hohem Druck zugeführt, beispielsweise unter einem Druck von 100 bis 200 bar. Diese Zufuhr kann über eine flexible Schlauchleitung 14 erfolgen. Der zugeführten Reinigungsflüssigkeit kann gegebenenfalls Chemikali zugemischt werden, die von dem Reinigungsgerät beispielsweise mittels eines Injektors angesaugt wird.

Es ist auch möglich, neben den Hochdruckspritzköpfen separate Spritzdüsen für die Ausgabe von Chemikalien vorzusehen, die dann unter Umständen unter geringerem Druck angegeben werden.

Die Spritzköpfe 6 können so ausgebildet sein, daß die Richtung der Düsenöffnungen und damit die Austrittsrichtung des Punktstrahles verstellt werden kann, so daß man beispielsweise mehrere Punktstrahlen in einem besonders verschmutzten Bereich konzentrieren oder die Punktstrahlen schräg zur Fahrtrichtung des Fahrzeuges richten kann, um eine Beaufschlagung der zu reinigenden Fläche von schräg vorne oder schräg hinten zu erreichen.

Die Spritzköpfe selbst sind mit Rotordüsen bestückt, also mit Düsen, die an einem Rotor so angeordnet sind, daß die Austrittsrichtung des Punktstrahles mit der Drehachse einen spitzen Winkel in der Größenordnung zwischen 0 und 30°, vorzugsweise 2 und 10° einschließt. Dadurch bewegt sich der Punktstrahl längs eines Kegelmantels und trifft unter unterschiedlichen Richtungen auf die zu reinigende Fläche des Fahrzeuges auf. Diese kegelförmige Bewegung zusammen mit der Translationsbewegung der Spritzköpfe längs der Stützen und des Portales führen zu einer Mehrfachüberstreichung der zu reinigenden Flächen, wobei durch die unterschiedlichen Winkel des Punktstrahls gegenüber der zu reinigenden Fläche alle Winkel und Nieschen wirkungsvoll gereinigt werden.

Es ist vorteilhaft, wenn die Drehachse des Spritzkopfes verstellbar ist. Dadurch kann man den Spritzkegel in die gewünschte Richtung lenken, beispielsweise bevorzugt von oben nach unten oder entgegen der Relativbewegungsrichtung des Fahrzeugs und des Portals.

Dies ist in der Zeichnung nicht eigens dargestellt, dem Fachmann stehen jedoch hier Realisierungsmöglichkeiten zur Hand.

Der in den Figuren 2 und 3 dargestellte Spritzkopf 6 weist einen Lagerbock 15 auf, der durch zwei in Längsnuten 16 eingreifende Leisten 17 der Stütze 2 längs dieser Stütze verschieblich gelagert ist. In den Lagerbock 15 mündet die parallel zur Stütze 2 verlaufende Zufuhrleitung 7, die sich in eine horizontale Lagerbohrung 18 öffnet. In dieser Lagerbohrung 18 ist ein Rotor 19 drehbar gelagert, der an seinem freien Ende die zur Drehachse geneigte Spritzdüse 20 trägt. Im Inneren des Rotors 19 befindet sich eine koaxiale, mit der Spritzdüse 20 in Verbindung stehende Längsbohrung 21, die bei einer entsprechenden Winkelstellung über eine Querbohrung 22 mit der Zufuhrleitung 7 verbunden wird. Bei anderen Winkelstellungen des Rotors 19, in der die Querbohrung 22 nicht mit der Zufuhrleitung 7 ausgerichtet ist, ist die Längsbohrung 21 gegenüber der Zufuhrleitung 7 unterbrochen. Dies führt dazu, daß bei einer Drehung des Rotors ein pulsierender Punktstrahl aus der Spritzdüse 20 abgegeben wird, also ein Strahl, der mit hoher Frequenz ein- und ausgeschaltet wird, wobei die Frequenz ein Vielfaches der Rotationsfrequenz ist.

Die Drehung des Rotors 19 erfolgt bei dem in der Zeichnung dargestellten Ausführungsbeispiel über ein Kettenrad 23 und eine Kette 24, die in nicht näher bezeichneter Weise mittels eines geeigneten Antriebes, zum Beispiel mittels eines Elektromotors, in Umlauf gebracht wird. Dieser Kettentrieb kann zusammen mit den Spritzköpfen 6 längs der Stütze beziehungsweise längs des Querbalkens verschiebbar sein, so daß alle Spritzköpfe von einem gemeinsamen Kettentrieb angetrieben werden.

Der Antrieb der als Rotordüse ausgebildeten Spritzdüse kann auch durch die zu versprühende Reinigungsflüssigkeit selbst erfolgen. Es sind beispielsweise Spritzdüsen bekannt, bei denen die Reinigungsflüssigkeit eine Turbine im Inneren des Spritzkopfes antreibt, die entweder direkt oder über ein Getriebe mit der Düse verbunden ist. Weiterhin sind Spritzdüsen bekannt, bei denen die Flüssigkeit den Rotor mittels des Rückstoßprinzipes antreibt. Insbesondere diese hydrodynamisch angetriebenen Spritzdüsen sind dazu geeignet, mit verstellbarer Drehachse an dem Portal gehalten zu sein, da sie über eine flexible Versorgungsleitung mit der Zufuhrleitung für die Reinigungsflüssigkeit verbunden werden können, so daß sich bei der Übertragung der Drehbewegung auf die unterschiedlich orientierten Spritzköpfe keinerlei Schwierigkeit ergibt.

Die Spritzdüsen 20 können so ausgeführt sein, daß ihr Neigungswinkel gegenüber der Drehachse verstellbar ist. Dies ist in der Zeichnung nicht eigens dargestellt, auch hier sind für den Fachmann praktische Realisierungsmöglichkeiten verfügbar. Dadurch kann der Öffnungswinkel des vom Punktstrahl umschriebenen Kegels an die Erfordernisse angepaßt werden.

Der Abstand der verschiedenen Spritzköpfe zueinander kann längs der Stützen und des Querbalkens je nach den Bedürfnissen unterschiedlich gewählt werden, desgleichen die Öffnungen der Düsen der einzelnen Spritzköpfe. Den einzelnen Spritzköpfen können weiterhin Schließventile zugeordnet sein, die für die Spritzköpfe einzeln oder in Gruppen betätigt werden, so daß die Reinigungsflüssigkeitszufuhr auf eine geringere Anzahl von Spritzköpfen konzentriert werden kann. All diese Maßnahmen dienen dazu, die Reinigungswirkung in verschiedenen Bereichen des Fahrzeuges den Notwendigkeiten anzupassen. Beispielsweise ist es vorteilhaft, im meist mehr verschmutzten Radbereich eine größere Anzahl von Punktstrahlen zu konzentrieren und Punktstrahlen mit größerem Durchmesser zu verwenden, um hier eine größere Reinigungswirkung zu erzielen.

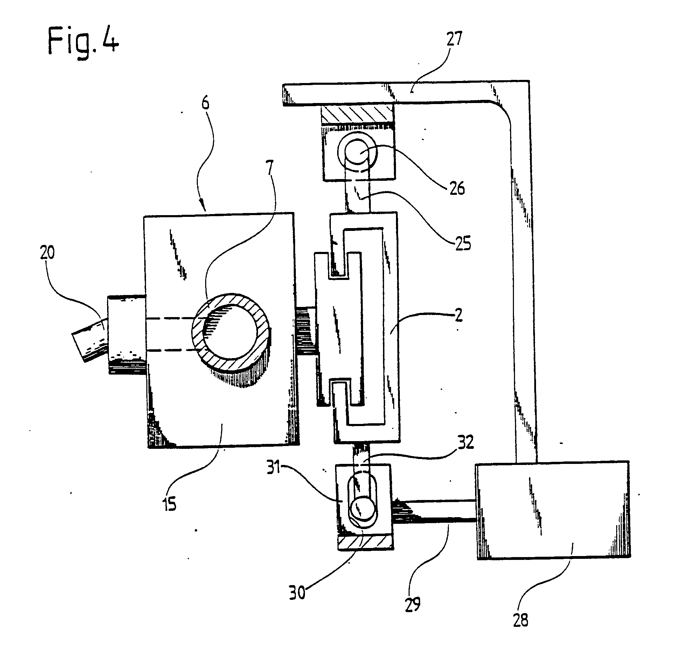

In Figure 4 ist ein abgewandeltes Ausführungsbeispiel in stark schematisierter Darstellung wiedergegeben. Dabei ist die Stütze 2, an der in gleicher Weise wie bei dem Ausführungsbeispiel der Figuren 2 und 3 ein Spritzkopf 6 längsveschieblich gelagert ist, ihrerseits mittels eines seitlichen Hebels 25 um eine parallel zur Stütze verlaufende Drehachse 26 verschwenkbar. Zu diesem Zweck trägt ein Rahmenteil 27 des Portals einen Antrieb 28, der eine Kolbenstange 29 so verschiebt, daß ein in einem Langloch 30 eines Mitnehmers 31 geführter seitlicher Hebel 32 der Stütze 2 mitgenommen wird. Dadurch wird die gesamte Stütze 2 um die Drehachse 26 verschwenkt, so daß auch die Spritzköpfe 6 eine entsprechende Schwenkbewegung erfahren. Eine solche Verschwenkung der Spritzköpfe kann dazu ausgenutzt werden, die Punktstrahlen beispielsweise dem Fahrzeug entgegenzurichten, um eine besonders günstige Reinigungswirkung zu erzielen.

Es wäre auch möglich, die Fahrzeugwaschanlage mit Sensoren auszustatten, die feststellen, ob sich das Fahrzeug neben dem Portal befindet. Dazu können zum Beispiel elektrooptische, kapazitive oder mechanische Sensoren verwendet werden. Die von diesen Sensoren erzeugten Signale können einer Steuerung zugeführt werden, die bei Beginn des Reinigungsvorgangs die Punktstrahlen dem Fahrzeug entgegenrichtet so daß die Punktstrahlen bevorzugt auf die Stirnfläche des Fahrzeuges auftreffen. Sobald sich das Fahrzeug neben dem Portal befindet, wird die Stütze 2 so verschwenkt, daß die Drehachsen der Spritzköpfe im wesentlichen senkrecht zur Fahrtrichtung stehen, so daß die Punktstrahlen annähernd senkrecht auf die Seitenflächen auftreffen. Sobald das Fahrzeug das Portal passiert hat, werden die Punktstrahlen dann in Fahrtrichtung gerichtet, so daß nunmehr die Rückseite des das Portal verlassenden Fahrzeuges getroffen wird. Dadurch ist eine zuverlässige Rundumreinigung möglich.

Die Ausführung der Figur 4 stellt nur schematisch eine mögliche Lösung dar. Andere Lösungen könnten zum Beispiel so ausgestaltet sein, daß die die Spritzköpfe 6 tragende Zufuhrleitung 7 selbst um ihre Längsachse gedreht wird. Dies ist insbesondere dann günstig, wenn die Fahrzeugwaschanlage nicht als Portal ausgebildet ist, sondern im wesentlichen aus einem senkrechten Zufuhrrohr für die Flüssigkeit besteht, an dem die Spritzköpfe gelagert sind. Bei einer solchen Ausführungsform können die Spritzköpfe so geneigt sein, daß sie das Fahrzeug nicht nur an der Seitenfläche beaufschlagen, sondern auch schräg von unten und schräg von oben, so daß mittels einer solchen Vorrichtung das gesamte Fahrzeug gereinigt werden kann, wenn eine solche Vorrichtung auf beiden Seiten des Fahrzeuges eingesetzt wird. Eine solche Vorrichtung kann auf einem Fahrgestell montiert sein, so daß eine Bedienungsperson diese Vorrichtung an dem zu reinigenden Fahrzeug entlangfahren kann. Dabei ist es günstig, wenn die mit den Spritzköpfen besetzte Zufuhrleitung auf- und abbewegbar ist, so daß gleichzeitig mit der Rotorbewegung der Düsen auch eine periodische Hin- und Herbewegung, der Spritzköpfe erreicht wird. Eine derartige Vorrichtung kann auch an Schienen an der Decke eines Gebäudes fahrbar gehalten sein.

Bei weiteren in der Zeichnung nicht dargestellten vorteilhaften Ausgestaltungen kann vorgesehen sein, daß der Querbalken des Portals an den Stützen höhenverstellbar gelagert ist. Dies erleichtert die Anpassung an Fahrzeuge unterschiedlicher Konturen. Weiterhin ist es möglich, das Portal gegenüber der senkrecht auf der Fahrtrichtung stehenden Vertikalebene so zu neigen, daß der Querbalken in Fahrtrichtung vorsteht. Dadurch kann erreicht werden, daß die Reinigung in verschiedener Höhe nacheinander erfolgt, so daß beispielsweise verschmutzte Flüssigkeit von oben nach unten abfliessen kann und dann von den unteren Spritzköpfen zuverlässig vom Fahrzeug entfernt wird.

## Patentansprüche

1. Fahrzeugwaschanlage, insbesondere für Fahrzeuge mit stark zerklüfteter Oberfläche, mit mehreren in Fahrzeuglängsrichtung am Fahrzeug vorbeigeführten, quer zur Fahrzeuglängsrichtung längs eines Portals nebeneinander angeordneten Spritzdüsen für eine gegebenenfalls mit Chemikalien versetzte Reinigungsflüssigkeit, wobei die Spritzdüsen (20) als einen Punktstrahl abgebende Rotordüsen ausgebildet sind, deren Punktstrahl unter einem spitzen Winkel bis etwa maximal 30° zur Drehachse der Rotordüse geneigt austritt und einen Kegelmantel beschreibt, dadurch gekennzeichnet, daß die Spritzdüsen in einer quer zur Fahrzeuglängsachse liegenden Ebene längs des Portals um ein Fahrzeug herum hin- und herbewegbar sind, wobei die Bewegungsamplitude benachbarter Spritzdüsen (20) mindestens so groß ist, daß sich die wiederholt von ihren Punktstrahlen überstrichenen Teile des Fahrzeuges (5) aneinander anschließen.

2. Anlage nach Anspruch 1, dadurch gekennzeichnet, daß die Richtung der Drehachse der Spritzdüse (20) verstellbar ist.

3. Anlage nach einem der Ansprüche 1 oder 2, dadurch gekennzeichnet, daß die Spritzdüsen durch die Reinigungsflussigkeit hydrodynamisch angetrieben sind.

4. Anlage nach einem der Ansprüche 1 oder 2, dadurch gekennzeichnet, daß die Spritzdüsen (20) durch einen motorischen Antrieb angetrieben sind.

5. Anlage nach einem der Ansprüche 1 bis 4, dadurch gekennzeichnet, daß der Neigungswinkel des Punktstrahls gegenüber der Drehachse verstellbar ist.

6. Anlage nach einem der voranstehenden Ansprüche, dadurch gekennzeichnet, daß die Spritzdüsen (20) durch einen gemeinsamen Antrieb (11; 24) wiederholt hin- und herbewegbar sind.

7. Anlage nach Anspruch 6, dadurch gekennzeichnet, daß mehrere Spritzdüsen (20) an einer wiederholt hin- und herbewegten Zufuhrleitung (7) für die Reinigungsflüssigkeit gehalten sind.

8. Anlage nach Anspruch 7, dadurch gekennzeichnet, daß die Zufuhrleitung (7) längs der Stützen (2, 3)) und des Querbalkens (4) eines Portals (1) verläuft und im Übergang zwischen Stützen (2, 3) und Querbalken (4) flexible Umlenkbereiche (8) aufweist.

9. Anlage nach einem der voranstehenden Ansprüche, dadurch gekennzeichnet, daß die Spritzdüsen (20) um eine Achse verstellbar sind, die quer zur Fahrzeuglängsachse und längs des Portals verläuft.

10. Anlage nach Anspruch 9, dadurch gekennzeichnet, daß auf das Fahrzeug (5) ansprechende Sensoren vorgesehen sind, die über eine Steuerung einen Antrieb (28) betätigen, der die Spritzdüsen (20) um die quer zur Fahrzeuglängsachse und längs des Portals verlaufende Achse verdreht.

11. Anlage nach einem der voranstehenden Ansprüche, dadurch gekennzeichnet, daß den Spritzdüsen (20) für einzelne Spritzdüsen oder Gruppen von Spritzdüsen betätigbare Schließventile zugeordnet sind.

12. Anlage nach einem der voranstehenden Ansprüche, dadurch gekennzeichnet, daß Spritzdüsen (20) mit unterschiedlichen Öffnungen vorgesehen sind.

13. Anlage nach Anspruch 12, dadurch gekennzeichnet, daß Spritzdüsen (20) mit größeren Öffnungen im unteren Teil der Anlage angeordnet sind.

14. Anlage nach einem der voranstehenden Ansprüche, dadurch gekennzeichnet, daß die Spritzdüsen (20) längs des Portals mit unterschiedlichen gegenseitigen Abständen angeordnet sind.

15. Anlage nach einem der voranstehenden Ansprüche, dadurch gekennzeichnet, daß der Punktstrahl pulsierend ausgebildet ist.

16. Anlage nach Anspruch 15, dadurch gekennzeichnet, daß die Pulsationsfrequenz des Punktstrahls bei Verwendung einer Rotordüse ein ganzzahliges Vielfaches der Drehzahl der Rotordüse ist.

17. Anlage nach einem der voranstehenden Ansprüche, dadurch gekennzeichnet, daß bei Anordnung der Spritzdüsen (20) an einem Portal (1) dies gegenüber einer senkrechten, quer zur Fahrzeuglängsachse angeordneten Ebene geneigt ist.

## Revendications

1. Installation de lavage de véhicules, notamment pour des véhicules présentant une surface profondément échancrée, comprenant plusieurs buses de pulvérisation que l'on fait circuler le long du véhicule, dans la direction longitudinale du vehiculé, qui sont disposées transversalement à la direction longitudinale du véhicule les unes à côté des autres le long d'un portique, et qui pulvérisent un liquide de nettoyage, éventuellement additionné de produits chimiques, les buses de pulvérisation (20) étant constituées par des buses à rotor émettant un jet ponctuel, dont le jet ponctuel sort en formant un angle aigu, jusqu'à environ 30° au maximum, avec l'axe de rotation des buses à rotor, et décrit une surface conique, caractérisée en ce que les buses de pulvérisation (20) peuvent se déplacer dans les deux sens le long d'un portique, sur tout le tour d'un véhicule, dans un plan s'étendant transversalement à l'axe longitudinal du véhicule, l'amplitude du mouvement des buses de pulvérisation adjacentes étant au moins suffisamment grande pour que les zones du véhicule (5) qui sont balayées répétitivement par leurs jet ponctuels soient mutuellement adjacentes.

2. Installation selon la revendication 1, caractérisé en ce que l'orientation de l'axe de rotation de la buse de pulvérisation (20) est réglable.

3. Installation selon une des revendications 1 et 2, caractérisée en ce que les buses de pulvérisation sont entraînées hydrodynamiquement par le liquide de nettoyage.

4. Installation selon une des revendications 1 et 2, caractérisée en ce que les buses de pulvérisation (20) sont entraînées par un entraînement motorisé.

5. Installation selon une des revendications 1 à 4, caractérisée en ce que l'angle d'inclinaison du jet ponctuel par rapport à l'axe de rotation est réglable.

6. Installation selon une des revendications précédentes, caractérisée en ce que buses de pulvérisation (20) peuvent être aninées d'un mouvement de va-et-vient répétitif par un entraînement commun (11; 24).

7. Installation selon la revendication 6, caractérisée en ce que plusieurs buses de pulvérisation (20) sont montées sur une conduite d'amenée (7) acheminant le liquide de nettoyage, qui est animée d'un mouvement de va-et-vient répétitif.

8. Installation selon la revendication 7, caractérisée en ce que la conduite d'amenée (7) s'étend le long des montants (2, 3) et de la traverse (4) d'un portique (1) et présente des régions de changement de direction (8) flexibles aux raccordements entre les montants (2, 3) et la traverse (4).

9. Installation selon une des revendications précédentes, caractérisée en ce que les buses de pulvérisation (20) sont réglables autour d'un axe qui s'étend transversalement à l'axe longitudinal du véhicule et le long du portique.

10. Installation selon la revendication 9, caractérisée en ce qu'il est prévu des capteurs répondant au véhicule (5) et qui actionnent, par l'intermédiaire d'une commande, un entraînement (28) qui fait tourner les buses de pulvérisation (20) autour de l'axe qui s'etend tansversalement à l'axe longitudinal du véhicule et le long du portique.

11. Installation selon une des revendications précédentes, caractérisée en ce qu'aux buses de pulvérisation (20) sont associées des soupapes de fermeture qui peuvent être actionnées pour les buses de pulvérisation individuelles ou pour des groupes de buses de pulvérisation.

12. Installation selon une des revendications précédentes, caractérisée en ce qu'il y est prévu des buses de pulvérisation (20) possédant différents orifices.

13. Installation selon la revendication 12, caractérisée en ce que des buses de pulvérisation (20) possédant de plus grands orifices sont agencées dans la partie inférieure de l'installation.

14. Installation selon une des revendications précédentes, caractérisée en ce que les buses de pulvérisation (20) sont disposées à des écartements mutuels qui varient sur la longueur du portique.

15. Installation selon une des revendications précédentes, caractérisée en ce que le jet ponctuel est pulsatoire.

16. Installation selon la revendication 15, caractérisée en ce que la fréquence de pulsation du jet ponctuel, dans le cas de l'utilisation d'une buse à rotor, est égale à an multiple entier de la vitesse de rotation de la buse à rotor.

17. Installation selon une des revendications précédentes, caractérisée en ce que, dans le cas où les buses de pulvérisation (20) sont montées sur un portique (1), ce portique est incliné par rapport à un plan vertical orienté transversalement à l'axe longitudinal du véhicule.

## Claims

1. A vehicle washing installation, in particular for vehicles with a surface having deep crevices, with several spray jets for a cleaning fluid which if necessary is mixed with chemicals, the spray jets being arranged adjacent to each other along a gantry transversely to the longitudinal direction of the vehicle and being guided past the vehicle in the longitudinal direction of the vehicle, the spray jets (20) being designed as rotor jets emitting a spot jet inclined at an acute angle of up to a maximum of approximately 30° to the rotation axis of the rotor jet and describing a conical outer surface, characterised in that the spray jets are movable to and fro around a vehicle, along the gantry, in a plane lying transversely to the longitudinal axis of the vehicle, the range of movement of adjacent spray jets (20) being at least sufficiently great for the parts of the vehicle (5) which are repeatedly covered by their spot jets to adjoin each other.

2. An installation according to claim 1, characterised in that the direction of the rotation axis of the spray jet (20) is adjustable.

3. An installation according to any one of claims 1 or 2, characterised in that the spray jets are hydrodynamically driven by the cleaning fluid.

4. An installation according to any one of claims 1 or 2, characterised in that the sprays jets (20) are driven by motor power.

5. An installation according to any one of claims 1 to 4, characterised in that the angle of inclination of the spot jet is adjustable in relation to the rotation axis.

6. An installation according to any one of the preceding claims, characterised in that the spray jets (20) can be moved to and fro repeatedly by a common drive (11; 24).

7. An installation according to claim 6, characterised in that several spray jets (20) are held on a feed pipe (7) for the cleaning fluid, the feed pipe being moved to and fro repeatedly.

8. An installation according to claim 7, characterised in that the feed pipe (7) extends along the supports (2, 3) and along the cross-beam (4) of a gantry (1) and has flexible bent regions (8) at the transition point between supports (2, 3) and cross-beam (4).

9. An installation according to any one of the preceding claims, characterised in that the spray jets (20) are adjustable about an axis extending transversely to the longitudinal axis of the vehicle and along the gantry.

10. An installation according to claim 9, characterised in that sensors are provided which are responsive to the vehicle (5) and which actuate a drive (28) via a control mechanism, the drive turning the spray jets (20) about the axis extending transversely to the longitudinal axis of the vehicle and along the gantry.

11. An installation according to any one of the preceding claims, characterised in that closure valves are allocated to the spray jets (20), and are actuatable for individual spray jets or groups of spray jets.

12. An installation according to any one of the preceding claims, characterised in that spray jets (20) are provided with different openings.

13. An installation according to claims 12, characterised in that spray jets (20) are arranged with larger openings in the lower part of the installation.

14. An installation according to any one of the preceding claims, characterised in that the spray jets (20) are arranged along the gantry at mutually differing distances.

15. An installation according to any one of the preceding claims, characterised in that the spot jet is designed so as to pulsate.

16. An installation according to claim 15, characterised in that the pulsation frequency of the spot jet, when a rotor jet is used, is an integral multiple of the speed of rotation of the rotor jet.

17. An installation according to any one of the preceding claims, characterised in that when the spray jets (20) are arranged on a gantry (1), the latter is inclined relative to a vertical plane arranged transversely to the longitudinal axis of the vehicle.

**Fig.1**

**Fig.2**

**Fig.3**

Fig.4